# EUROPÄISCHE PATENTSCHRIFT

(11) **EP 4 308 867 B1**
(45) Veröffentlichungstag und Bekanntmachung des Hinweises auf die Patenterteilung: **06.05.2026**
(21) Anmeldenummer: 22711216.6
(22) Anmeldetag: 07.03.2022
(51) Int. Cl.: C04B 2/12, F27D 17/10, F27B 1/22, F27B 1/24, F27D 99/00

(54) **VERFAHREN ZUM BRENNEN VON KARBONATHALTIGEM MATERIAL IN EINEM SCHACHTOFEN**
METHOD FOR FIRING CARBONATE-CONTAINING MATERIAL IN A SHAFT FURNACE
PROCÉDÉ POUR LA CUISSON D'UN MATÉRIAU CONTENANT DU CARBONATE DANS UN FOUR À CUVE

(30) Priorität: 15.03.2021 BE 202105194; 15.03.2021 DE 102021202485
(43) Veröffentlichungstag der Anmeldung: 24.01.2024
(73) Patentinhaber: Maerz Ofenbau AG, 8002 Zürich (CH); thyssenkrupp Polysius GmbH, 59269 Beckum (DE); thyssenkrupp AG, 45143 Essen (DE)
(72) Erfinder: PIRINGER, Hannes, 5712 Beinwil am See (CH); BUCHER, Patrick, 5012 Schönenwerd (CH); WALLIMANN, Roger, 8004 Zürich (CH)
(74) Vertreter: thyssenkrupp Intellectual Property GmbH
(86) Internationale Anmeldenummer: PCT/EP2022/055721
(87) Internationale Veröffentlichungsnummer: WO 2022/194593

(56) Entgegenhaltungen:
- EP-B1- 2 054 688
- WO-A1-2021/170478
- WO-A2-02/33338
- DE-A1- 3 140 582
- DE-A1- 3 145 549
- DE-B3- 102010 060 866
- DE-B4- 102008 053 136

## Beschreibung

Die Erfindung betrifft einen Schachtofen und Verfahren zum Brennen von Kalkstein oder anderen Karbonaten, mit einem Schachtofen, der wenigstens eine Brennzone und eine Kühlzone aufweist.

Aus der CH 378 217 A ist ein Schachtofen zum kontinuierlichen Brennen von mineralischen Werkstoffen mit einer Brennzone und einer Kühlzone bekannt, wobei die Heißgase der Brennzone und die Brenngutkühlluft über einen im Übergangsbereich zwischen Brenn- und Kühlzone ausgebildeten Absaugraum abgeführt werden.

Aus der DE 10 2010 060 866 B3 ist ein Kalkofen bekannt, der eine Brennzone aufweist, die mit ihrem unteren Ende in die Kühlzone des Schachtes hineinragt. Mit dieser Bauweise ist lediglich eine maximale Durchsatzleistung von 250t/d möglich. In der Kalkindustrie werden derzeit allerdings Kalkschachtöfen mit einer Durchsatzleistung von etwa 400 bis 800t/d gefordert. Des Weiteren ist Kalk mit einer hohen Reaktivität gewünscht, wobei gleichzeitig das entstehende Abgas eine hohe CO2-Konzentration aufweisen soll, um eine anschließende Sequestierung zu ermöglichen.

DE 31 40 582 A1 beschreibt ein weiteres Beispiel eines Verfahrens zum Brennen und Sintern von stückigem Gut in einem Schachtofen.

Zur Herstellung von Branntkalk mit einer hohen Reaktivität bei gleichzeitiger Erzeugung eines Abgases mit einer hohen CO2-Konzentration entstehen bei bekannten Verfahren häufig Temperaturen, die sich in einem Bereich oberhalb von 1100°C befinden und so eine Herstellung von hochreaktivem Branntkalk verhindern.

Es ist daher die Aufgabe der vorliegenden Erfindung, ein Verfahren zum Brennen und/oder Kalzinieren von stückigem Gut anzugeben, das auf möglichst energieeffiziente Weise die Herstellung von Branntkalk mit einer hohen Reaktivität bei gleichzeitiger CO2 Abscheidung ermöglicht.

Diese Aufgabe wird erfindungsgemäß durch ein Verfahren mit den Merkmalen des unabhängigen Verfahrensanspruchs 1 gelöst. Vorteilhafte Weiterbildungen ergeben sich aus den abhängigen Ansprüchen.

Nach einem ersten Aspekt umfasst die Erfindung ein Verfahren zum Brennen von insbesondere karbonathaltigem Material in einem Schachtofen mit einem Schacht, wobei das Material durch einen Materialeinlass in eine Vorwärmzone zum Vorwärmen des Materials, eine Brennzone zum Brennen des Materials und eine Kühlzone zum Kühlen des gebrannten Materials zu einem Materialauslass strömt, wobei Kühlluft in die Kühlzone eingelassen wird, wobei das Abgas über einen Abgasauslass aus der Vorwärmzone des Schachts ausgelassen wird und wobei das über den Abgasauslass aus der Vorwärmzone des Schachts ausgelassene Abgas zumindest teilweise in die Brennzone geleitet wird. Ein Umwälzgas wird innerhalb der Brennzone umgewälzt, sodass sich eine Gleichstrombrennzone innerhalb der Brennzone ausbildet, und wobei das Umwälzgas ausschließlich aus dem Abgas der Gleichstrombrennzone besteht.

Ein Schachtofen zum Brennen von insbesondere karbonathaltigem Material mit einem Schacht umfasst in Strömungsrichtung des Materials einen Materialeinlass, eine Vorwärmzone zum Vorwärmen des Materials, eine Brennzone zum Brennen des Materials, eine Kühlzone zum Kühlen des gebrannten Materials, und einen Materialauslass zum Auslassen des Materials aus dem Schachtofen. Der Schachtofen weist einen Abgasauslass zum Auslassen von Abgas aus der Vorwärmzone des Schachts auf. Der Abgasauslass ist zur Rückführung des Abgases mit der Brennzone verbunden. Der Schachtofen weist eine Umwälzeinrichtung zum Umwälzen von Umwälzgas innerhalb der Brennzone und zur Erzeugung einer Gleichstrombrennzone innerhalb der Brennzone auf.

Eine solche Umwälzeinrichtung bietet den Vorteil, dass innerhalb der Brennzone eine Gleichstrombrennzone ausgebildet wird, in welcher das zu brennende Material und das Gas in die gleiche Richtung, nämlich von oben nach unten, durch den Schacht strömen. Bei einer Umwälzung von Umwälzgas innerhalb eines Teils der Brennzone wird eine Kalzinierung des Material bei geringen Temperaturen von etwa 900°C bis 1100°C ermöglicht, wodurch das fertige Brenngut eine hohe Reaktivität erhält, wie sie beispielsweise für Anwendungen in Stahlwerken gefordert wird.

Bei dem Umwälzgas handelt es sich vorzugsweise um Gas der Brennzone, insbesondere dem unteren, an die Kühlzone angrenzenden Bereich der Brennzone. Das Umwälzgas besteht im Wesentlichen aus CO₂ und H₂O, insbesondere, da kein Kühlgas aus der Kühlzone in die Brennzone gelangt. Vorzugsweise weist die Brennzone in Strömungsrichtung des Materials eine Gegenstrombrennzone und eine sich daran direkt anschließende Gleichstrombrennzone auf. Das Umwälzgas wird vorzugsweise ausschließlich der Gleichstrombrennzone entnommen und insbesondere ausschließlich der Gleichstrombrennzone wieder zugeführt. Das Umwälzgas besteht insbesondere ausschließlich aus Abgas der Gleichstrombrennzone. Die Umwälzeinrichtung ist insbesondere derart ausgebildet, dass sie die Gleichstrombrennzone ausbildet.

Bei dem zu brennenden Material handelt es sich beispielsweise um Kalkstein oder Dolomitstein insbesondere mit einer Korngröße von 10 bis 200mm, vorzugsweise von 15 bis 120mm, höchstvorzugsweise 30 bis 100mm. Das Abgas weist vorzugsweise einen CO2-Anteil von mindestens 35% bis 45%, vorzugsweise mindestens 90% auf, vorzugsweise bezogen auf trockenes Gas.

Der Materialeinass ist insbesondere an dem oberen Ende des Schachtes angeordnet. In Strömungsrichtung des Materials vor der Brennzone ist die Vorwärmzone zum Vorwärmen des Materials angeordnet. Die Vorwärmzone schließt sich vorzugsweise direkt an einen Materialeinlass des Materials in den Schachtofen an und dient der Vorwärmung des Materials auf eine Temperatur von etwa 600°C bis 800°C. Die Brennzone schließt sich vorzugsweise direkt an die Vorwärmzone an und dient dem Brennen des Materials, wobei dieses vorzugsweise auf eine Temperatur von etwa 900°C bis 1100°C, insbesondere 1000°C, erhitzt wird. Die Kühlzone schließt sich vorzugsweise direkt an die Brennzone an und dient der Kühlung des gebrannten Materials auf eine Temperatur von beispielsweise 100 °C. Der Materialauslass ist beispielsweise in einem sich an die Kühlzone anschließenden Auslasstrichter angeordnet, wobei der Materialauslass beispielsweise einen Drehteller oder Schubtische aufweist zum Austragen von Material aus der Kühlzone in den Auslasstrichter. Die Kühlluft wird vorzugsweise über einen Kühllufteinlass in die Kühlzone des Schachtofens einblasen.

Der Kühllufteinlass ist vorzugsweise in der Schachtwand der Kühlzone angeordnet.

Der Materialeinlass und/ oder der Materialauslass ist/sind insbesondere als Schleuse zum Einlassen und/ oder Auslassen von Material in den Schachtofen ausgebildet. Ein als Schleuse ausgebildeter Materialeinlass ist vorzugsweise derart ausgestaltet, dass lediglich das zu brennende Rohmaterial in den Schacht gelangt, nicht aber die Umgebungsluft. Vorzugsweise ist die Schleuse derart ausgebildet, dass sie den Schacht luftdicht gegen die Umgebung abdichtet und einen Eintritt von Feststoffen, wie das zu brennende Gut, in den Schacht erlaubt.

In der Brennzone des Schachts sind vorzugsweise eine oder mehrere Brennkammerebenen angeordnet, in denen materialfreie Räume, insbesondere Brennkammern, vorzugsweise umfangsmäßig um die Brennzone herum angeordnet sind. In jedem materialfreien Raum, vorzugsweise in jeder Brennkammer, ist zumindest ein Gaseinlass zum Einlassen des rezirkulierten Abgases angeordnet. Unter dem Begriff "materialfrei" ist vorzugsweise "frei von Brenngut" zu verstehen. Bei einem materialfreien Raum handelt es sich vorzugsweise um einen Raum, in dem kein zu brennendes Material vorhanden ist. Der materialfreie Raum weist insbesondere eine Mehrzahl von Gaseinlässen auf, über welche das rezirkulierte Abgas in die Brennzone eingelassen wird. Der Schachtofen weist vorzugsweise eine Oxidationsmittelzuleitung zur Leitung von Oxidationsmittel, insbesondere sauerstoffreichem Gas, in die Brennzone auf. In der Brennkammer ist vorzugsweise zumindest ein Brenner angeordnet. Beispielsweise ist in der Brennzone zumindest ein zusätzlicher Brenner, insbesondere ein als Brennerlanze ausgebildeter Seitenbrenner, angeordnet. Die Seitenbrenner erstrecken sich vorzugsweise durch die Schachtwand in die Brennzone und sind insbesondere in der Einstecktiefe variabel angeordnet.

Der Abgasauslass ist vorzugsweise im oberen Bereich des Schachts, insbesondere in der Vorwärmzone oder im oberen Bereich der Brennzone angeordnet und insbesondere mit der Oxidationsmittelzuleitung zur Leitung des Abgases über die Oxidationsmittelzuleitung in die Brennzone verbunden.

An den Abgasauslass schließt sich vorzugsweise eine Abgasauslassleitung an zum Leiten des aus dem Schacht, insbesondere der Vorwärmzone, abgezogenen Abgases. Die Abgasauslassleitung weist beispielsweise in Strömungsrichtung des Abgases optional eine Wassereinspritzvorrichtung zum Befeuchten und gleichzeitigen Abkühlen des Abgases auf. Das aus der Vorwärmzone über den Abgasauslass abgeführte Abgas weist vorzugsweise eine Temperatur von etwa 400°C auf und wird in der Wassereinspritzvorrichtung beispielsweise auf eine Temperatur von 200°C abgekühlt und weist vorzugsweise einen Wassergehalt von 10% bis 25% auf.

Die Abgasauslassleitung weist beispielsweise in Strömungsrichtung des Abgases im Anschluss an den Abgasauslass einen Verdichter, insbesondere einen Ventilator, und einen Abgasfilter auf. Vorzugsweise schließt sich in Strömungsrichtung eine Kühleinrichtung, wie beispielsweise ein Wärmetauscher mit einer Wasserkühlung, an. Die Kühleinrichtung kühlt das Abgas vorzugsweise auf eine Temperatur von 30°C. **Im** Anschluss an die Kühleinrichtung weist die Abgasauslassleitung vorzugsweise eine Abzweigung auf, wobei ein Teilstrom des Abgases über einen Ventilator oder Verdichter ausgeschleust und ein weiterer Teilstrom als Treibgas vorzugsweise über zumindest einen weiteren Ventilator oder Verdichter und eine Treibgasleitung der Brennzone zugeführt, insbesondere rezirkuliert wird. Optional ist in Strömungsrichtung des Abgases vor der Kühleinrichtung ebenfalls eine Abzweigung zum Abzweigen eines Teilstroms des Abgases angeordnet, sodass lediglich ein Teilstrom des Abgases in die Kühleinrichtung und der übrige Teilstrom des Abgases in die Brennzone rezirkuliert wird.

Die Rückführung des über den Abgasauslass aus dem Schacht ausgelassene Abgas zumindest teilweise in die Brennzone ermöglicht eine Erwärmung der Atmosphäre in der Brennzone mittels des abgezogenen CO2-haltigen Abgases. Somit wird vorzugsweise reines CO2 zusammen mit Sauerstoff und optionale einem geringen Anteil an Wasserdampf in die Brennzone eingeführt und sichergestellt, dass das Abgas einen sehr hohen Anteil an CO2 von beispielsweise mehr als 90% aufweist. Vorzugweise wird lediglich ein Teil des Abgases, beispielsweise etwa 20% bis 50%, der Brennzone wieder zugeführt, wobei der übrige Teil des Abgases aus dem Schachtofen abgeführt und beispielsweise für eine anschließenden Sequestierung gespeichert wird. Alternativ weist das Abgas einen geringeren CO₂-Gehalt, beispielsweise 45% für die Sodaherstellung oder 35% für die Zuckerherstellung oder 30% für die Herstellung von gefälltem Kalziumkarbonat, auf.

Gemäß einer ersten Ausführungsform weist die Brennzone einen Umwälzgasauslass zum Auslassen von Umwälzgas aus der Brennzone und einen Umwälzgaseinlass zum Einlassen des über den Umwälzgasauslass ausgelassenen Umwälzgases in die Brennzone auf, wobei die Umwälzeinrichtung mit dem Umwälzgaseinlass und dem Umwälzgasauslass verbunden ist. Insbesondere ist die Umwälzgaseinrichtung zwischen dem Umwälzgaseinlass und dem Umwälzgasauslass angeordnet und direkt mit diesen verbunden. Die Umwälzgaseinrichtung ist vorzugsweise derart ausgebildet, dass sie das Umwälzgas außerhalb des Schachtes, insbesondere außerhalb der Brennzone, von dem Umwälzgasauslass hin zu dem Umwälzgaseinlass beschleunigt. Insbesondere ist die Umwälzgaseinrichtung derart ausgebildet, dass sie an dem Umwälzgasauslass einen Unterdruck erzeugt.

Der Umwälzgasauslass ist vorzugsweise unterhalb, in Strömungsrichtung des zu brennenden Materials stromabwärts, des Umwälzgaseinlasses angeordnet. Der Umwälzgaseinlass und der Umwälzgasauslass sind insbesondere innerhalb der Brennzone, vorzugsweise innerhalb der Gleichstrombrennzone angeordnet. Der Umwälzgaseinlass und der Umwälzgasauslass sind vorzugsweise jeweils als ein materialfreier Raum innerhalb der Brennzone ausgebildet. Bei dem materialfreien Raum handelt es sich beispielsweise um einen Ringraum oder eine radial auswärts der Brennzone angeordneten Kammer.

Alternativ, insbesondere bei einem als Ringschachtofen ausgebildeten Schachtofen, umfasst die Umwälzeinrichtung einen beispielhaft konzentrisch zu dem Schacht und innerhalb dessen angeordneten Innenzylinder. Der Innenzylinder ist beispielsweise innerhalb der Brennzone angeordnet und erstreckt sich von der Gleichstrombrennzone in die Gegenstrombrennzone und vorzugsweise bis in die Vorwärmzone oder insbesondere bis an die Grenze zwischen der Vorwärmzone und der Brennzone und über einen oder eine Mehrzahl von Auslässen durch die Schachtwand aus dem Schacht hinaus. Der Umwälzgasauslass ist vorzugsweise im Innenzylinder innerhalb der Gleichstrombrennzone ausgebildet und dient zum Einlassen von Gas der Gleichstrombrennzone in den Innenzylinder. Über den Umwälzgasauslass wird das Umwälzgas aus der Gleichstrombrennzone ausgelassen und dem Umwälzgaseinlass zum Einlassen des Umwälzgases in die Brennzone über die Umwälzeinrichtung zugeführt.

Der Schachtofen, insbesondere der Ringschachtofen, weist beispielsweise eine Mehrzahl von Umwälzgaseinlässen zum Einlassen von Umwälzgas in die Brennzone auf, die vorzugswiese umfangsmäßig um die Brennzone, insbesondere die Gleichstrombrennzone angeordnet sind. Vorzugweise weist der Schachtofen, insbesondere der Ringschachtofen, eine Mehrzahl von Umwälzeinrichtungen auf, die jeweils mit einem jeweiligen Umwälzgaseinlass verbunden sind. Die Brennzone ist vorzugsweise ringförmig ausgebildet.

Gemäß einer weiteren Ausführungsform weist die Umwälzeinrichtung einen Injektor zum Beschleunigen des Umwälzgases in Richtung des Umwälzgaseinlasses in die Brennzone auf. Der Injektor weist vorzugsweise eine Querschnittsverengung auf oder ist insbesondere düsenförmig ausgebildet. Eine Beschleunigung des Umwälzgases sorgt für einen Unterdruck an dem Umwälzgasauslass, sodass sich innerhalb der Brennzone eine Gasströmung in Richtung des Umwälzgasauslasses ausbildet. Diese Gasströmung erzeugt die Gleichstrombrennzone zwischen dem Umwälzgaseinlass und dem Umwälzgasauslass. Vorzugsweise weist das Gas innerhalb der Gleichstrombrennzone eine Temperatur von etwa 900C bis 1100°C auf. Die Kalzinierung des Materials in der Gegenstrombrennzone und die anschließende weitere Kalzinierung in der Gleichstrombrennzone bei einer Temperatur bis maximal etwa 1100°C ermöglicht die Herstellung von hochreaktivem Branntkalk.

Gemäß einer weiteren Ausführungsform ist die Umwälzeinrichtung über eine Treibgasleitung zur Leitung des Abgases mit dem Abgasauslass verbunden, sodass das Abgas zumindest teilweise zusammen mit dem Umwälzgas in die Brennzone eingeführt wird. Die Treibgasleitung zweigt vorzugsweise von der Abgasauslassleitung, insbesondere stromabwärts der Kühleinrichtung, ab, wobei das in der Treibgasleitung strömende Abgas als Treibgas in die Umwälzeinrichtung, insbesondere den Injektor geleitet wird und daher im Folgenden als Treibgas bezeichnet wird. Das Treibgas weist vorzugsweise eine Temperatur von etwa 30°C auf. Vor dem Einlassen des Treibgases in die Umwälzeinrichtung ist die Treibgasleitung vorzugsweise mit einer Oxidationsmittelleitung zum Einleiten eines Oxidationsmittels in die Treibgasleitung verbunden. Bei dem Oxidationsmittel handelt es sich beispielsweise um reinen Sauerstoff, Luft, mit Sauerstoff angereicherte Luft oder ein Gas mit einem Sauerstoffanteil von mindestens 90%.

Gemäß einer weiteren Ausführungsform ist die Treibgasleitung mit einem Wärmetauscher zur Erwärmung des in der Treibgasleitung strömenden Abgases, insbesondere des Treibgases, verbunden. Der Wärmetauscher ist vorzugsweise mit der Kühlgasabzugseinrichtung verbunden, sodass das Abgas, insbesondere das Treibgas, in dem Wärmetauscher insbesondere im Gegenstrom zu der abgezogenen Kühlluft erwärmt wird. Vorzugsweise wird das Treibgas in dem Wärmetauscher auf eine Temperatur von etwa 400°C bis 600°C, insbesondere 500°C erwärmt. Das Oxidationsmittel wird vorzugsweise in Strömungsrichtung des Treibgases vor dem Wärmetauscher in die Treibgasleitung eingeleitet.

Gemäß einer weiteren Ausführungsform ist die Treibgasleitung mit dem Injektor verbunden, sodass das Treibgas zusammen mit dem Umwälzgas in den Injektor eingeführt wird. Das Einleiten des Treibgases in die Umwälzeinrichtung, insbesondere den Injektor, erzeugt einen Unterdruck an dem Umwälzgasauslass, sodass das Umwälzgas innerhalb der Brennzone in den Umwälzgasauslass strömt.

Gemäß einer weiteren Ausführungsform ist zwischen dem Abgasauslass und der Brennzone eine Heizvorrichtung zum Erhitzen des Abgases auf eine Temperatur von 800°C bis 1200°C, insbesondere 1100°, angeordnet. Die Heizvorrichtung ist vorzugsweise zwischen dem Abgasauslass und der Umwälzeinrichtung oder einem Gaseinlass zum Einlassen des Abgases in die Brennzone angeordnet. Die Heizvorrichtung zum Erhitzen des Abgases auf eine Temperatur von 800°C bis 1200°C, insbesondere 1100°C bietet den Vorteil, dass auf Brenner innerhalb der Brennzone verzichtet werden kann. Vorzugsweise stellt die Heizvorrichtung die gesamte zur Kalzinierung erforderliche Energie zur Verfügung. Vorzugsweise ist die Heizvorrichtung außerhalb der Brennzone angeordnet, sodass das Abgas vor dem Einlassen in die Brennzone bereits die zur Kalzinierung erforderliche Temperatur aufweist. Beispielsweise weist der Schachtofen zumindest zwei oder eine Mehrzahl von Heizvorrichtungen auf, die beispielsweise parallel zueinander geschaltet sind und jeweils einen Teilstrom des über den Abgasauslass abgezogenen Abgases erhitzen. Vorzugsweise umfasst die Heizvorrichtung eine elektrische Heizvorrichtung, eine Solareinrichtung, einen Verbrennungsreaktor und/ oder einen Wärmetauscher. Bei der Heizvorrichtung handelt es sich beispielsweise um eine elektrisch betriebene Heizvorrichtung. Insbesondere wird die Heizvorrichtung mittels Solarenergie betrieben und umfasst vorzugsweise einen Solarreceiver, insbesondere eine Photovoltaikanlage zur Erzeugung von elektrischer Energie mittels Solarenergie. Die Heizeinrichtung umfasst beispielsweise eine Solarthermie-Anlange, wobei beispielsweise ein Wärmetauscherfluid mittels Solarenergie erhitzt und in einem Wärmetauscher vorzugsweise im Gegenstrom zu dem rezirkulierten Abgas dieses erhitzt. Beispielsweise umfasst die Heizvorrichtung einen Solarreceiver, der das rezirkulierte Abgas insbesondere direkt erhitzt. Der Solarreceiver umfasst dazu beispielsweise einen Teil der Abgasauslassleitung. Die Heizvorrichtung weist beispielsweise einen Verbrennungsreaktor auf, der vorzugsweise zur Verbrennung von erneuerbaren Energieträgern, wie beispielsweise Holz, ausgebildet ist. Vorzugsweise umfasst die Heizvorrichtung einen Wärmetauscher zur Erhitzung des Abgases im Gegenstrom zu einem Wärmeträgerfluid. Das Wärmeträgerfluid wird beispielsweise mittels Solarenergie und/ oder dem Verbrennungsreaktor erhitzt.

Gemäß einer weiteren Ausführungsform weist die Brennzone einen Gaseinlass zum Einlassen von über den Abgasauslass abgeführten Abgases in die Brennzone auf. Der Gaseinlass ist vorzugsweise separat zu dem Umwälzgaseinlass in der Brennzone angeordnet. Beispielsweise ist der Gaseinlass auf dem gleichen Höhenniveau mit dem Umwälzgaseinlass angeordnet. Der Gaseinlass ist insbesondere in dem materialfreien Raum angeordnet. Der Schachtofen weist beispielsweise eine Mehrzahl von Gaseinlässen zum Einlassen des Abgases in die Brennzone auf, die vorzugsweise umfangsmäßig m die Brennzone herum angeordnet sind.

Gemäß einer weiteren Ausführungsform weist die Umwälzeinrichtung einen oder mehrere Brenner auf. Vorzugsweise ist der Brenner stromabwärts des Injektors angeordnet, sodass das aus dem Injektor in den Umwälzgaseinlass strömende Gas mittels des Brenners erhitzt wird. Vorzugsweise weist der Schachtofen eine Brennstoffleitung zum Leiten von Brennstoff, wie beispielsweise Methan auf, wobei die Brennstoffleitung mit der Umwälzeinrichtung verbunden ist.

Gemäß einer weiteren Ausführungsform weist der Schachtofen eine Kühlgasabzugseinrichtung zum Auslassen von Kühlluft aus dem Schacht auf. Die Kühlgasabzugseinrichtung ist vorzugsweise separat zu der Umwälzeinrichtung angeordnet und insbesondere mit dieser fluidtechnisch nicht verbunden. Die Kühlgasabzugseinrichtung ist vorzugsweise derart ausgebildet und eingerichtet, dass Kühlluft der Kühlzone vollständig über die Kühlgasabzugseinrichtung aus dem Schacht ausgelassen wird, sodass keine Kühlluft in die Brennzone gelangt Die Kühlgasabzugseinrichtung ist beispielsweise als materialfreier Raum in der Kühlzone ausgebildet, wobei der materialfreie Raum beispielswiese seitlich, radial auswärts des Schachts oder Ringraum um die Kühlzone herum ausgebildet. Die Kühlluftabzugseinrichtung ist beispielsweise mit dem Wärmetauscher zum Erhitzen des Abgases im Gegenstrom verbunden. Die Kühlgasabzugseinrichtung weist beispielsweise eine Mehrzahl von Kühlluftauslässen zum Auslassen der Kühlluft aus dem Schacht auf, wobei diese beispielsweise umfangsmäßig um den Schacht herum angeordnet sind. Die Anzahl der Wärmetauscher stromabwärts der Kühlgasabzugseinrichtung entspricht insbesondere der Anzahl der Kühlgasauslässe.

Innerhalb der Kühlzone ist vorzugsweise ein Kühllufteinlass zum Einlassen von Kühlluft in die Kühlzone angeordnet, wobei der Kühllufteinlass beispielsweise mit einem Verdichter zur Erzeugung eines Überdrucks in dem Schachtofen verbunden ist.

Gemäß einer weiteren Ausführungsform ist die Kühlgasabzugseinrichtung als Innenzylinder innerhalb der Kühlzone ausgebildet. Der Innenzylinder erstreckt sich vorzugsweise vollständig oder teilweise mittig durch die Kühlzone, sodass die Kühlzone vollständig oder teilweise als Ringschacht ausgebildet ist. Der Innenzylinder weist vorzugsweise einen Kühlgasauslass auf, der sich von dem Innenzylinder aus dem Schacht heraus erstreckt. Der Innenzylinder weist insbesondere einen Gaseinlass in der Kühlzone zum Einlassen von Kühlgas aus der Kühlzone in den Innenzylinder auf, wobei der Gaseinlass vorzugsweise oberhalb des Kühlgasauslasses angeordnet ist. Die Kühlluft der Kühlzone wird vorzugsweise vollständig über die Kühlgasabzugseinrichtung aus dem Schacht ausgelassen, sodass keine Kühlluft in die Brennzone gelangt.

Gemäß einer weiteren Ausführungsform ist zwischen dem Abgasauslass und dem Gaseinlass der Brennzone ein Wärmetauscher angeordnet. Insbesondere sind zwischen dem Abgasauslass und dem Gaseinlass in die Brennzone zwei oder mehr Wärmetauscher angeordnet, die beispielweise parallel zueinander geschalten sind und insbesondere jeweils einen Teilstrom des Abgases erwärmen. Zumindest ein Wärmetauscher ist beispielsweise mit der Kühlluftabzugseinrichtung, insbesondere dem Kühlgasauslass, verbunden, sodass das Abgas im Gegenstrom zu der abgezogenen Kühlluft erwärmt wird. Zumindest ein Wärmetauscher ist beispielsweise mit einem Gasauslass zum Auslassen von Gas aus der Brennzone verbunden, sodass das Abgas im Gegenstrom zu dem abgezogenen Gas der Brennzone erwärmt wird.

Die mit Bezug auf den Schachtofen beschriebenen Vorteile und Ausführungen treffen in verfahrensgemäßer Entsprechung ebenfalls auf das Verfahren zum Brennen Material in einem Schachtofen zu.

Gemäß einer Ausführungsform wird Umwälzgas über einen Umwälzgasauslass aus der Brennzone ausgelassen, der Umwälzeinrichtung zugeführt und von der Umwälzeinrichtung über einen Umwälzgaseinlass in die Brennzone eingeleitet.

Das Umwälzgas wird gemäß einer weiteren Ausführungsform in Richtung des Umwälzgaseinlasses mittels eines Injektors beschleunigt.

Gemäß einer weiteren Ausführungsform wird das Abgas, insbesondere das Treibgas, zumindest teilweise in die Umwälzeinrichtung geleitet und zusammen mit dem Umwälzgas in die Brennzone eingeführt. Ein Teil des über den Abgasauslass aus der Vorwärmzone des Schachts ausgelassenes Abgases wird vorzugsweise separat zu einem separat zu dem Umwälzgaseinlass angeordneten Gaseinlass zum Einlassen von Gas in die Brennzone eingeleitet.

Die Kühlluft wird gemäß einer weiteren Ausführungsform über eine Kühlgasabzugseinrichtung aus dem Schacht ausgelassen. Vorzugsweise wird die gesamte in die Kühlzone eingeleitete Kühlluft vollständig über die Kühlgasabzugseinrichtung aus dem Schacht ausgelassen, sodass insbesondere keine Kühlluft in die Brennzone gelangt.

Gemäß einer weiteren Ausführungsform wird das Abgas vor dem Einleiten in die Brennzone einem Wärmetauscher zugeführt. Innerhalb der Brennzone wird vorzugsweise in Strömungsrichtung des Materials eine Gegenstrombrennzone und eine Gleichstrombrennzone ausgebildet. Innerhalb des Schachtofens ist vorzugsweise ein Überdruck ausgebildet.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt zwei schematische Darstellungen eines Schachtofens in einer Längsschnittansicht und einer um 90° gedrehten Längsschnittansicht gemäß einem Ausführungsbeispiel.
- Fig. 2: zeigt zwei schematische Darstellungen eines Schachtofens in einer
- Fig.3a-h: Längsschnittansicht und einer um 90° gedrehten Längsschnittansicht gemäß einem weiteren Ausführungsbeispiel. zeigt eine schematische Darstellung eines Schachtofens der Fig. 1 oder 2 in mehreren horizontalen Querschnittansichten gemäß einem weiteren Ausführungsbeispiel.
- Fig. 4a-b: zeigt zwei schematische Darstellungen eines Schachtofens in einer Längsschnittansicht und einer horizontalen Querschnittansicht gemäß einem weiteren Ausführungsbeispiel.
- Fig. 5: zeigt eine schematische Darstellung eines als Ringschacht ausgebildeten Schachtofens in einer Längsschnittansicht gemäß einem weiteren Ausführungsbeispiel.
- Fig. 6: zeigt eine schematische Darstellung eines als Ringschacht ausgebildeten Schachtofens in einer Längsschnittansicht gemäß einem weiteren Ausführungsbeispiel.
- Fig. 7a bis f: zeigt eine schematische Darstellung eines Schachtofens der Fig. 5 oder 6 in mehreren horizontalen Querschnittansichten gemäß einem weiteren Ausführungsbeispiel.

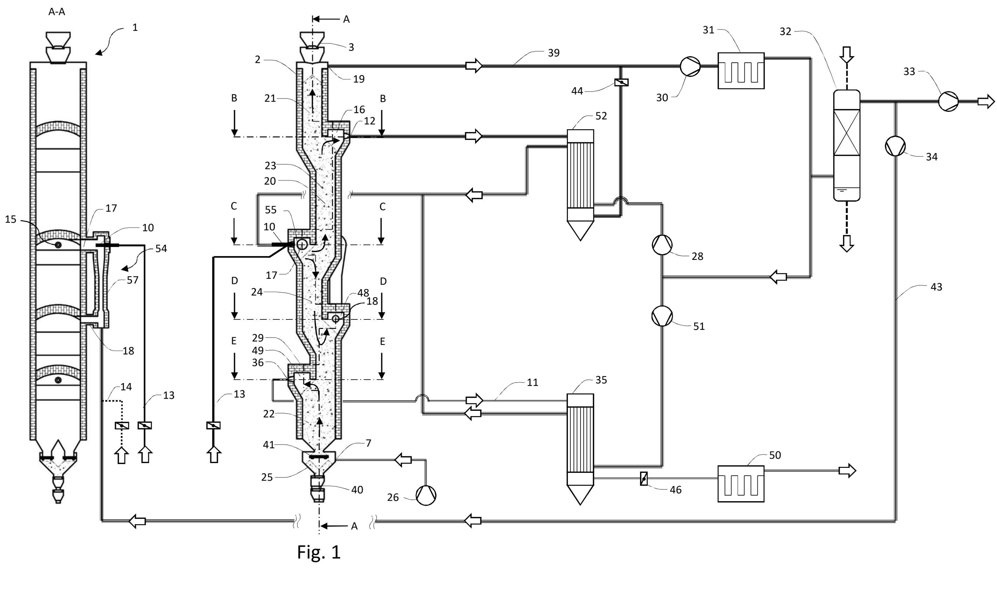

Fig. 1 zeigt einen Schachtofen 1 in zwei Ansichten, wobei der dargestellte Schachtofen 1 vorzugsweise bei geringeren Produktionsleistungen von beispielweise 250t/d eingesetzt wird. Der Schachtofen 1 zum Brennen von körnigem Material umfasst einen Schacht 2, der sich vorzugsweise in vertikaler Richtung erstreckt und beispielsweise einen im Wesentlichen konstanten Querschnitt aufweist. Beispielsweise weist der Schacht 2 einen runden, insbesondere kreisförmigen, oder eckigen, insbesondere viereckigen Querschnitt auf. Der Schacht 2 ist von einer Schachtwand umgeben, die beispielsweise aus Stahl mit einer sich daran anschließenden gemauerten, feuerfesten Innenwand ausgebildet ist. Der Schacht 2 weist an seinem oberen Ende einen Materialeinlass 3 auf, der beispielsweise als obere Öffnung des Schachts 2 und insbesondere als Schleuse 3 ausgebildet ist und sich vorzugsweise über den gesamten oder einen Teil des Querschnitts des Schachts 2 erstreckt. Der Materialeinlass 3 dient dem Einlassen von zu brennenden Material in den Schachtofen 1. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Der Schacht 2 weist in einem oberen Bereich einen Abgasauslass 19 zum Abführen von Ofenabgas aus dem Schacht 2 auf. Das Abgas wird aus dem Abgasauslass 19 in eine Abgasauslassleitung 39 geführt. Innerhalb des Schachts 2 wird das zu brennende Material schwerkraftbedingt von oben nach unten durch den Schacht 2 gefördert, wobei der Schacht 2 in Förderrichtung des Materials eine Vorwärmzone 21 zum Vorwärmen des Materials, eine Brennzone 20 zum Brennen des Materials und eine Kühlzone 22 zum Kühlen des gebrannten Materials aufweist. Die Vorwärmzone 21 erstreckt sich vorzugsweise von dem Materialeinlass 3 zu der Brennzone 20 und dient der Vorwärmung des Materials vor dem Brennen. In der Brennzone 20 findet im Unterschied zur Vorwärmzone 21 ein Brennen, insbesondere Kalzinieren, vorzugsweise durch eine Entsäuerung, des Materials statt.

Der Schacht 2 weist beispielhaft vier materialfreie Räume 16, 48, 49, 55 auf, wobei sich ein in Strömungsrichtung des Materials erster materialfreier Raum 16 in der Brennzone 20, insbesondere an dem Übergang zwischen der Brennzone 20 und der Vorwärmzone 21 befindet. Der Schacht 2 weist einen zweiten materialfreien Raum 55 in der Brennzone 20 und einen dritten materialfreien Raum 48 stromabwärts am unteren Bereich der Brennzone 20 auf. Ein vierter materialfreier Raum 49 ist in der Kühlzone 22 angeordnet. Der Schacht 2 erstreckt sich beispielhaft in vier parallel zueinander versetzten, vertikalen Abschnitten, wobei die materialfreien Räume 16, 48, 49, 55 jeweils lokale Querschnittsvergrößerungen des Schachtes 2 darstellen, in welche das Material schwerkraftbedingt nicht einströmt. Die materialfreien Räume 16, 48, 49, 55 erstrecken sich beispielhaft radial nach außen und sind durch eine sich von oben vertikal zwischen den materialfreien Raum 16, 48, 49, 55 und dem Schacht 2 erstreckende Wand teilweise von dem Schacht 2 getrennt.

Der erste materialfreie Raum 16 weist einen Gasauslass 12 zum Auslassen von Abgas aus der Brennzone 20 auf. Der zweite materialfreie Raum 55 in der Brennzone 20 weist beispielhaft ein Gaseinlass 15 zum Einlassen von aus dem Abgasauslass 19 aus dem Schacht 2 abgeführten Abgas in die Brennzone 20 auf. Des Weiteren weist der zweite materialfreie Raum 55 einen Umwälzgaseinlass 17 zum Einlassen eines Umwälzgases aus der Brennzone 20. Der dritte materialfreie Raum 48 weist einen Umwälzgasauslass 18 zum Auslass des Umwälzgases aus der Brennzone 20 auf. Der vierte materialfreie Raum 49 ist vorzugsweise als Kühlgasabzugseinrichtung ausgebildet und weist beispielhaft einen Kühlgasauslass 36 zum Auslassen von Kühlluft über eine mit dem Kühlgasauslass 36 verbundene Kühlluftabzugsleitung 11 auf.

Bei dem Umwälzgas handelt es sich um Gas, das innerhalb der Brennzone 20 zirkuliert wird. Vorzugsweise wird Gas aus der Brennzone 20 über den Umwälzgasauslass 18 abgezogen und dem Umwälzgaseinlass 17 wieder zugeführt. Zwischen dem Umwälzgasauslass 18 und dem Umwälzgaseinlass 17 ist eine Umwälzeinrichtung 54 angeordnet, mittels welcher das Umwälzgas von dem Umwälzgasauslass 18 zu dem Umwälzgaseinlass 17 beschleunigt wird. Der Umwälzgasauslass 18 ist in Strömungsrichtung des zu brennenden Materials hinter dem Umwälzgaseinlass 17 angeordnet. Vorzugsweise ist an dem Umwälzgasauslass 18 ein Unterdruck ausgebildet, dass das Umwälzgas innerhalb der Brennzone 20 in Richtung des Umwälzgasauslasses 18 beaufschlagt wird. Das in die Brennzone 20 über den Umwälzgaseinlass 17 eintretende Umwälzgas strömt teilweise entgegen der Strömungsrichtung des zu brennenden Materials in Richtung der Vorwärmzone 21 und teilweise im Gleichstrom mit dem Material in Richtung des Umwälzgasauslasses 18. Innerhalb der Brennzone 20 bildet sich vorzugsweise zwischen dem Umwälzgaseinlass 17 und dem Umwälzgasauslass 18 eine Gleichstrombrennzone 24 aus. Vorzugsweise ist in Strömungsrichtung des Materials vor dem Umwälzgaseinlass 17 eine Gegenstrombrennzone 23 ausgebildet. Die Gegenstrombrennzone 23 der Brennzone 20 ist vorzugsweise ausschließlich zwischen dem Umwälzgaseinlass 17 und der Vorwärmzone 21 ausgebildet.

Die Umwälzgaseinrichtung 54 umfasst beispielsweise einen Injektor 57, der vorzugsweise als Düse ausgebildet ist. Mittels des Injektors 57 wird das Umwälzgas in Richtung des Umwälzgaseinlasses 17 beschleunigt, wobei der Unterdruck an dem Umwälzgasauslass 18 ausgebildet wird und vorzugsweise einstellbar ist.

Am unteren Ende des Schachts 2 ist ein Materialauslass 40 zum Abführen des gebrannten Materials angeordnet. Bei dem Materialauslass 40 handelt es sich beispielsweise um eine wie mit Bezug auf den Materialeinlass 3 beschriebene Schleuse. An die Kühlzone 22 schließt sich In Materialförderrichtung ein Auslasstrichter 25, insbesondere ein unterer Materialbunker, an, der in dem Materialauslass 40 zum Auslassen des Materials aus dem Schachtofen 1 mündet. In dem Auslasstrichter 25 ist beispielhaft eine Austragsvorrichtung 41 angeordnet, die dem Auslassen von Material aus der Kühlzone 22 des Schachtofens 1 in den Auslasstrichter 25 dient. Bei der Austragsvorrichtung 41 handelt es sich beispielsweise um einen Drehteller oder Schubtische.

Der Schachtofen 1 weist einen oder mehrere Kühllufteinlässe 7 zum Einbringen von Kühlluft in den Schachtofen 1 auf. Beispielhaft ist in dem Schachtofen 1 der Fig. 1 ein Kühllufteinlass 7 angeordnet, der Kühlluft in den Auslasstrichter 25 einleitet. Vorzugsweise wird die Kühlluft mit einem Druck von bis zu 500 mbar in den Auslasstrichter 25 mittels eines Kühlluftverdichters 26 eingeblasen.

Das Material strömt Im Betrieb des Schachtofens 1 im Wesentlichen schwerkraftbedingt durch den Schacht 2 und wird im Gegenstrom oder teilweise im Gleichstrom thermisch behandelt.

Die Höhe des Schachts 2 ist vorzugsweise durch die verfahrensgemäß im Zusammenhang mit der Einstellung der Fördergeschwindigkeit mittels der Austragsvorrichtung 41 zu bestimmenden Verweilzeiten des Brennmaterials bestimmt.

Diese Verweilzeiten verteilen sich auf die obere, sich an den Materialeinlass 3 anschließende Vorwärmzone 21, auf die nach unten folgende Brennzone 20 und die zumindest bis zur Austragsvorrichtung 41 verlaufende Kühlzone 22. Vorzugsweise wird in der Vorwärmzone 21 das Material bis auf eine Temperatur von bis zu ca. 800°C vorgewärmt, wobei die Brennzone 20 beispielsweise eine Temperatur von 800°C bis 1100°C aufweist und in der Kühlzone 22 das Material wieder bis auf ca. 100°C abgekühlt wird.

Im Betrieb des Schachtofens 1 bildet sich in der Brennzone 20 des Schachts 2 eine Materialsäule mit dem über die Materialaufgabe 3 zugeführten Gut aus, wobei das Gut durch Schwerkraft nach unten wandert und im Bereich der Kühlzone 22 über den Materialauslass 40 als kalziniertes Produkt, beispielweise Branntkalk, abgezogen wird. Das Gut füllt dabei die Brennzone 20 vorzugsweise über den gesamten vorzugsweise kreisringförmigen Querschnitt und die Kühlzone 22 aus. Das Kühlgas durchströmt die Materialschüttung und gelangt in den vierten materialfreien Raum 49, insbesondere die Kühlgasabzugseinrichtung. Vorzugsweise wird über die Kühlgasabzugseinrichtung ausschließlich Kühlgas und kein Abgas der Brennzone 20 aus dem Schacht 2 ausgelassen. Insbesondere strömt das Kühlgas durch die Kühlzone 22 und anschließend in die Kühlgasabzugseinrichtung, sodass das Kühlgas vollständig über die Kühlgasabzugseinrichtung aus dem Schacht ausgelassen wird und nicht die Brennzone 20 gelangt.

Der vierte materialfreie Raum 49 ist vorzugsweise über die Kühlluftabzugsleitung 11 mit einem Regelorgan 46 in Form von beispielsweise einer Klappe verbunden zur Regelung der Menge an Gas, das durch den vierten materialfreien Raum 49, insbesondere die sich daran anschließende Kühlluftabzugsleitung 11 strömt.

Der Abgasauslass 19 zum Abführen des Abgases aus der Vorwärmzone 21 ist vorzugsweise über die Abgasauslassleitung 39 mit einem Abgasfilter 31 zur Entstaubung des Abgases und optional mit einer Kühleinrichtung 32, zur Kühlung des heißen Abgases verbunden. Über die Abgasauslassleitung 39 wird zumindest teilweise oder vollständig das Abgas der Brennzone 20 aus dem Schacht 2 abgeführt. Das über den Abgasauslass 19 und die Abgasauslassleitung 39 aus dem Schacht 2 abgezogene Abgas wird insbesondere in dem Abgasfilter 31 entstaubt und dann beispielsweise zur weiteren Verarbeitung als entstaubtes Abgas mittels eines Ventilators 33 abgeführt. Optional kann stromabwärts des Abgasfilters 31 eine Kühlung des Abgases in einer Kühleinrichtung 32 erfolgen. Das vor oder nach der Kühleinrichtung 32 abgeführte Abgas weist einen hohen CO2-Anteil auf und kann beispielsweise einer Sequestrierung und/ oder einer weiteren industriellen Verwertung, wie beispielsweise der Herstellung von Soda, Zucker oder gefälltem Calciumcarbonat, zugeführt werden.

Das gekühlte Abgas wird vorzugsweise teilweise abgeführt und teilweise, vorzugsweise stromabwärts der Kühleinrichtung 32, über eine Treibgasleitung 43 als Treibgas zu der Umwälzeinrichtung 54 geführt. Aus Gründen der Übersichtlichkeit ist die Verbindung der Treibgasleitung 43 mit der Umwälzeinrichtung 54 lediglich für die linke Ansicht des Schachtofens 1 dargestellt. Die Treibgasleitung 43 ist vorzugsweise mit dem Injektor 57 verbunden, sodass das Treibgas unterhalb oder auf dem Höhenniveau des Umwälzgasauslasses 18 in den Injektor 57 eingeführt wird. Vor dem Eintritt in die Umwälzeinrichtung 54 wird das Treibgas optional mit einem Oxidationsmittel vermischt. Dazu ist die Treibgasleitung 43 mit einer Oxidationsmittelleitung 14 verbunden, wobei die Menge an Oxidationsmittel beispielsweise über eine Dosiereinrichtung, wie beispielsweise eine Klappe in der Oxidationsmittelleitung 14 einstellbar ist. Bei dem Oxidationsmittel handelt es sich beispielsweise um reinen Sauerstoff, Luft, mit Sauerstoff angereicherte Luft oder ein Gas mit einem Sauerstoffanteil von mindestens 90%.

Optional und in Fig. 1 nicht dargestellt, ist die Treibgasleitung 43 mit einem Wärmetauscher 35 verbunden, wobei der Wärmetauscher 35 mit dem Kühlgasauslass 36 verbunden ist, sodass das Treibgas 43 vor dem Eintritt in die Umwälzeinrichtung 54 im Gegenstrom mit der abgezogenen Kühlluft erwärmt wird. Vorzugsweise wird in einer solchen Ausführung das Oxidationsmittel in Strömungsrichtung des Treibgases vor dem Wärmetauscher 35 in die Treibgasleitung 43 eingeleitet.

In dem zweiten materialfreien Raum 55 ist optional ein Brenner 10 angeordnet. Der Brenner 10 ist beispielsweise als Brennerlanze ausgebildet und mit einer Brennstoffleitung 13 zur Zuführung von Brennstoff zu dem Brenner 10 verbunden. Die Menge an Brennstoff ist beispielsweise über eine Dosiereinrichtung, wie beispielsweise eine Klappe in der Brennstoffleitung 13 einstellbar. Optional ist der Brenner 10 innerhalb der Umwälzeinrichtung 54 angeordnet.

Beispielsweise wird ein Teil des mittels der Abgasauslassleitung 39 abgeführten Abgases über den Gaseinlass 15 in die Brennzone 20 eingeführt, beispielsweise um der Brennzone 20 Wärme zuzuführen und die Verbrennungstemperatur einzustellen. Dieses rezirkulierte Abgas wird vorzugsweise stromaufwärts der Kühleinrichtung 32 und stromabwärts des Abgasfilters 31 abgezweigt.

Vor dem Eintritt in die Brennzone 20 wird das rezierkulierte Abgas vorzugsweise in einem durch die abgezogen Kühlluft betriebenen Wärmetauscher 35 auf insbesondere 500°C bis 800°C vorgewärmt. Damit die Wärmeübertragung in dem Wärmetauscher 35 nicht durch Ablagerungen vermindert wird, kann es zweckmäßig sein, dass das über den vierten materialfreien Raum 49 abgezogene Kühlgas, welches beispielsweise eine Temperatur von 900°C hat, zuvor auf unter 800°C, vorzugsweise unter 700°C, abzukühlen, wobei die Abkühlung beispielsweise durch Vermischung mit Luft erfolgen kann. Vorzugsweise ist ein Ventilator 51 oder Verdichter, insbesondere ein Hochdruckventilator, Drehkolben- oder Schraubenverdichter, zum Beschleunigen des rezirkulierten Abgases in Richtung des Wärmetauschers 35 vorgesehen. Es ist ebenfalls denkbar, dass das rezirkulierte Abgas ausschließlich einem einzigen Wärmetauscher, nämlich dem Wärmetauscher 35, vor dem Einleiten des Abgases in die Brennzone 20 zugeführt wird. Die als Wärmetauscher ausgebildete Kühleinrichtung 32 ist vorzugsweise in Strömungsrichtung des Abgases nach der Abzweigung des abzuführenden Abgases und beispielsweise vor dem Ventilator 33 angeordnet.

Die Kühlluftabzugsleitung 11 ist insbesondere mit dem Wärmetauscher 35 und im Anschluss daran optional mit einem Filter 50 verbunden, sodass die über den vierten materialfreien Raum 49 abgezogene Kühlluft gekühlt und entstaubt wird. Zur weiteren Kühlung der abgezogenen Kühlluft wird optional ein Kühlmittel, wie Luft mit der abgezogenen Kühlluft vermischt, vorzugsweise vor dem Eintritt in den Wärmetauscher 35. In Strömungsrichtung der abgezogenen Kühlluft ist optional vor dem Regelorgan 46 ein Filter zur Staubabscheidung angeordnet. In der Kühlgasabzugsleitung 11 sind somit nacheinander der Wärmetauscher 35, das Regelorgan 46 und optional ein Filter 50 vor oder nach dem Regelorgan 46 angeordnet. Es ist ebenfalls denkbar, die Kühlabluft nicht durch einen Wärmetauscher 35 zu leiten, sondern beispielsweise zur Erzeugung von Strom, Trocknung von Mahlgut oder zu Heizzwecken zu verwenden.

Beispielhaft wird das über den ersten materialfreie Raum 16 aus der Brennzone abgeführte Gas in einen zweiten Wärmetauscher 52 und anschließend in die Abgasauslassleitung 39 zur zumindest teilweisen Rezirkulation in die Brennzone 20 geleitet. Der Schachtofen 1 weist beispielhaft zwei Wärmetauscher 35 und 52 auf, denen jeweils ein Teil des über den Abgasauslass 19 abgezogenen Abgases zur Erwärmung zugeführt wird. Die Menge der Abgasteilströme wird vorzugsweise über Regeleirichtungen, wie beispielsweise eine Klappe oder ein Ventil, in der Abgasauslassleitung 39 eingestellt. Die Wärmetauscher 35 und 52 sind vorzugsweise parallel zueinander geschaltet.

Die Erwärmung des Teilstroms des Abgases erfolgt in dem Wärmetauschern 52 mit dem über den ersten materialfreien Raum 16 abgezogenen Gas und in dem anderen Wärmetauscher 35 mit dem über den vierten materialfreie Raum 49 abgezogenen Kühlgases jeweils im Gegenstrom. Der in dem Wärmetauscher 52 mittels des aus der Brennzone 20 abgezogenen Gases erwärmte Abgasteilstrom wird mit dem in dem Wärmetauscher 35 mittels des aus der Kühlzone 22 abgezogenen Gases erwärmten Abgasteilstrom zusammengeführt und ich die Brennzone 20 eingeleitet.

Vor dem Einlassen des abgezogenen Abgases in die Brennzone 20, insbesondere in den Gaseinlass 15 des zweiten materialfreien Raums 55, wird das Abgas mittels des Wärmetauschers 35, 52 auf eine Temperatur von etwa 500°C bis 800°C erwärmt. Zwischen dem Wärmetauscher 35, 52 und dem Gaseinlass 15 in die Brennzone 20 ist optional eine Heizvorrichtung angeordnet zum Erhitzen des Abgases auf eine Temperatur von 800°C bis 1200°C, insbesondere 1100°. Bei der Heizvorrichtung handelt es sich beispielsweise um eine elektrisch betriebene Heizvorrichtung. Insbesondere wird die Heizvorrichtung mittels Solarenergie betriebenen. Es ist ebenfalls denkbar, dass die Heizvorrichtung einen Wärmetauscher umfasst, wobei das im Gegenstrom strömende Wärmemittel über Solarenergie erhitzt wird. Die Heizvorrichtung ist vorzugsweise als Verbrennungsreaktor zur Verbrennung von vorzugsweise erneuerbaren Energieträgern, wie Holz, ausgebildet.

Optional ist zusätzlich zu der Heizvorrichtung keine weitere Heizeinrichtung, wie beispielsweise Brenner, in dem Schacht 2, insbesondere der Brennzone 20, vorgesehen, sodass die Kalzinierung ausschließlich über das heiße in die Brennzone 20 rückgeführte Abgas bereitgestellt wird. Es ist ebenfalls denkbar, dass zusätzlich zu der Heizvorrichtung einer oder eine Mehrzahl von Brennern in der Brennzone 20 angeordnet.

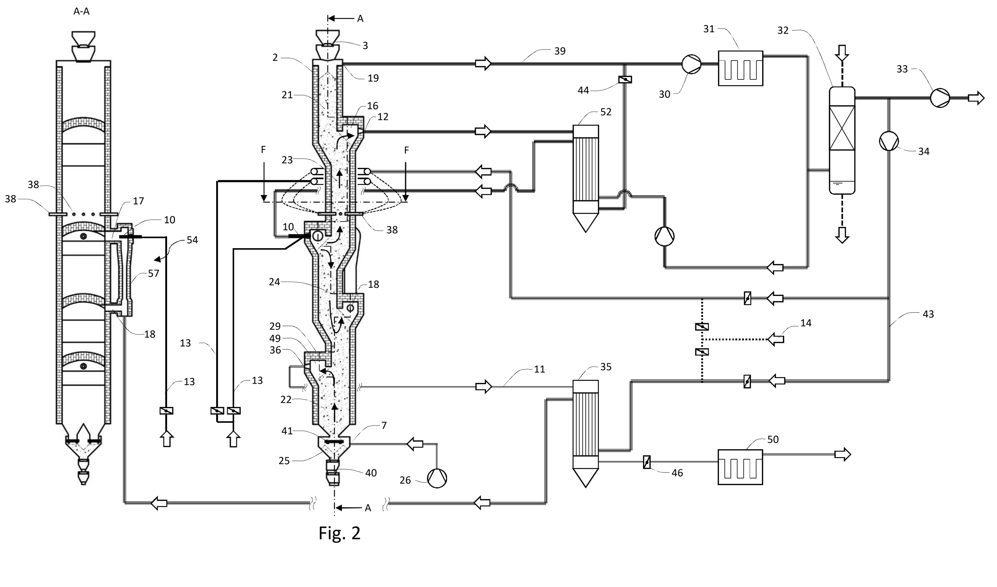

Fig. 2 zeigt ein weiteres Ausführungsbeispiel eines Schachtofens 1, wobei der Schachtofen 1 größtenteils dem Schachtofen 1 der Fig. 1 entspricht. Fig. 2 zeigt ebenfalls den Schachtofen 1 in zwei Ansichten, sodass die Position der Umwälzeinrichtung 54 deutlich wird. Im Unterschied zur Fig. 1 weist der Schachtofen 1 der Fig. 2 eine Mehrzahl von Brennern, insbesondere Seitenbrennern 38, auf, die sich beispielhaft seitlich durch die Schachtwand in den Schacht 2 erstrecken. Die Seitenbrenner 38 sind vorzugsweise in der Brennzone 20, insbesondere in der Gegenstrombrennzone 23 angeordnet. Beispielhaft sind alle Seitenbrenner 38 auf dem gleichen Höhenniveau angeordnet, vorzugsweise am unteren Endbereich der Gleichstrombrennzone 23. Die Seitenbrenner 38 sind vorzugsweise gleichmäßig zueinander beabstandet um den Umfang der Brennzone 20 angeordnet. Die Seitenbrenner 38 sind jeweils mit der Brennstoffleitung 13 über eine Brennstoffringleitung verbunden. Die Seitenbrenner 38 sind vorzugsweise mit der Treibgasleitung 43 verbunden, wobei ein Teil des in der Treibgasleitung 43 geführten Abgases vor der Umwälzeinrichtung 54, insbesondere vor dem Wärmetauscher 35, abgezweigt wird und einer Ringleitung zur Zufuhr zu den Seitenbrennern 38 zugeführt wird. Die Seitenbrenner 38 sind vorzugsweise mit einer Oxidationsmittelleitung 14 zur Leitung des Oxidationsmittels zu den Seitenbrennern 38 verbunden. Insbesondere wird das Oxidationsmittel in die Treibgasleitung 43 eingeleitet, wobei die Menge an Oxidationsmittel vorzugsweise über eine Dosiereinrichtung einstellbar ist.

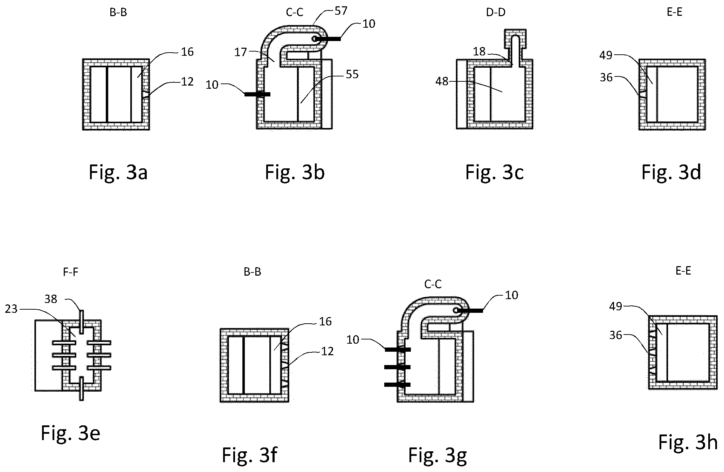

Fig. 3a-h zeigt eine Mehrzahl von horizontalen Querschnittansichten, wobei die Schnittebenen in den Fig. 1 und 2 angegeben sind. Fig. 3a zeigt einen Querschnitt durch den ersten materialfreien Raum 16, wobei der Gasauslass 12 zum Auslassen von Gas aus der Brennzone 20 mittig in der radial nach außen weisenden Seitenwand des ersten materialfreien Raum 16 angeordnet ist. Fig. 3f zeigt ein Ausführungsbeispiel, wobei eine Mehrzahl, insbesondere drei Gasauslässe 12 in der Seitenwand angeordnet sind. Vorzugsweise sind die Gasauslässe 12 gleichmäßig zueinander beabstandet und insbesondere auf dem gleichen Höhenniveau angeordnet.

Fig. 3b und 3g zeigen jeweils ein Ausführungsbeispiel des zweiten materialfreien Raums 55, wobei beispielsweise ein Brenner 10 in der Umwälzeinrichtung 54, insbesondere in dem Injektor 57 und insbesondere ein zweiter Brenner 10 in dem materialfreien Raum 55 angeordnet ist. Fig. 3g zeigt ein Ausführungsbeispiel, wobei in dem zweiten materialfreien Raum 55 beispielhaft drei Brenner 10 vorzugsweise gleichmäßig zueinander beabstandet und insbesondere auf dem gleichen Höhenniveau angeordnet sind.

Fig. 3c zeigt einen horizontalen Querschnitt durch den dritten materialfreien Raum 48 mit dem Umwälzgasauslass 18. Der Umwälzgasauslass weist beispielhaft einen rechteckigen Querschnitt auf, der eine geringere Querschnittsfläche aufweist als der Umwälzgaseinlass 17.

Fig. 3d und 3h zeigen jeweils ein Ausführungsbeispiel des vierten materialfreien Raums 49, wobei beispielsweise ein Kühlgasauslass 36 mittig in der radial nach außen weisenden Seitenwand des vierten materialfreien Raums 49 angeordnet ist. In Fig. 3h sind beispielhaft eine Mehrzahl, insbesondere drei Kühlgasauslässe 36 auf einem Höhenniveau und gleichmäßig zueinander beabstandet in der radial nach außen weisenden Seitenwand des vierten materialfreien Raums 49 angeordnet.

Fig. 3e zeigt einen horizontalen Querschnitt durch die Gegenstrombrennzone 23 der Fig. 2 mit einer Mehrzahl von Brennern, insbesondere Seitenbrennern 38. Beispielhaft sind acht Seitenbrenner 38 in einer Ebene angeordnet und vorzugsweise im Wesentlichen gleichmäßig zueinander beabstandet angeordnet.

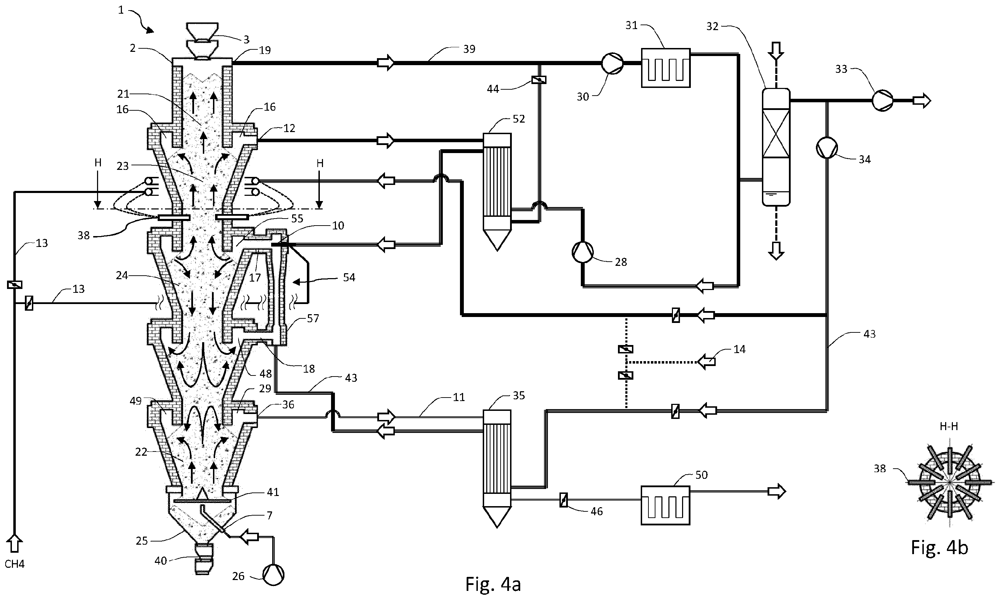

Fig. 4a zeigt ein weiteres Ausführungsbeispiel eines Schachtofens 1, wobei gleiche Elemente mit gleichen Bezugszeichen gekennzeichnet sind. **In** Fig. 4a sind die materialfreien Räume 16, 48, 49, 55 als Ringräume ausgebildet. Beispielhaft sind die Brennzone 20, insbesondere jeweils die Gegenstrombrennzone 23 und die Gleichstrombrennzone 24, und die Kühlzone 22 jeweils trichterförmig ausgebildet, wobei der jeweils obere Bereich der Brennzonen 23, 24 und der Kühlzone 22 einen größeren Durchmesser als der jeweilige untere Bereich aufweist.

Die Vorwärmzone 21 der Fig. 4a ist beispielhaft zylinderförmig ausgebildet und erstreckt sich mit ihrem unteren Bereich teilweise in den oberen Bereich der Brennzone 20, insbesondere der Gegenstrombrennzone 23, hinein, sodass zwischen der äußeren Wand der Vorwärmzone 21 und der inneren Wand der Gegenstrombrennzone 23 der erste materialfreie Raum 16 ausgebildet ist. Der obere Bereich der Brennzone 20 ist als Gegenstrombrennzone 23 ausgebildet und erstreckt sich vorzugsweise mit seinem unteren Bereich in den oberen Bereich der Gleichstrombrennzone 24 hinein, sodass zwischen der äußeren Wand der Gegenstrombrennzone 23 und der inneren Wand der Gleichstrombrennzone 24 der zweite materialfreie Raum 55 als Ringraum ausgebildet ist. Der obere Bereich der Gleichstrombrennzone 24 erstreckt sich vorzugsweise mit seinem unteren Bereich in den oberen Bereich der der Kühlzone 22 hinein, sodass zwischen der äußeren Wand der Gleichstrombrennzone 24 und der inneren Wand der Kühlzone 22 der vierte materialfreie Raum 49 ausgebildet ist. Die Gleichstrombrennzone 24 ist beispielhaft aus zwei trichterförmigen Abschnitten ausgebildet, wobei zwischen diesen der dritte materialfreie Raum 48 als Ringraum ausgebildet ist. Die als Ringräume ausgebildeten materiafreien Räume 16, 48, 49, 55 sind jeweils umfangsmäßig um den sich vertikal erstreckenden Schacht 2, durch welchen das zu brennende Material strömt, angeordnet, sodass sie materialfrei aber vom Gas durchströmbar sind. Der zweite materialfreie Raum 55 weist einen Umwälzgaseinlass 17 und der dritte materialfreie Raum 48 weist einen Umwälzgasauslass 18 gemäß der Ausführungsbeispiele der Fig. 1 und 2 auf.

Der Schachtofen 1 der Fig. 4a weist ebenfalls eine Umwälzeinrichtung 54 auf, die im Wesentlichen der Umwälzeinrichtung 54 der Fig. 1 und 2 entspricht und zwischen dem Umwälzgaseinlass 17 und dem Umwälzgasauslass 18 angeordnet ist.

Der Schachtofen 1 der Fig. 4a weist eine Mehrzahl von Seitenbrennern 38 auf, die im Wesentlichen denen der Fig. 2 entsprechen. Fig. 4b zeigt eine horizontale Querschnittsansicht an der in Fig. 4a eingezeichneten Schnittebene. Die Seitenbrenner 38 sind beispielhaft umfangsmäßig um die Brennzone 20 angeordnet und im Wesentlichen gleichmäßig zueinander beabstandet. Beispielhaft weisen die Seitenbrenner 38 unterschiedliche Einstecktiefen auf, wobei vorzugsweise jeder zweite Seitenbrenner 38 die gleiche Eistecktiefe aufweist. Insbesondere sind die Seitenbrenner in radialer Richtung verschiebbar angebracht, sodass die Einstecktiefe einstellbar ist.

Die Leitungen zur Rezirkulation des Abgases und zur Leitung der Gasströme, des Oxidationsmittels und des Brennstoffs entsprechen im Wesentlichen denen der in Fig. 2 oder alternativ der Fig. 1.

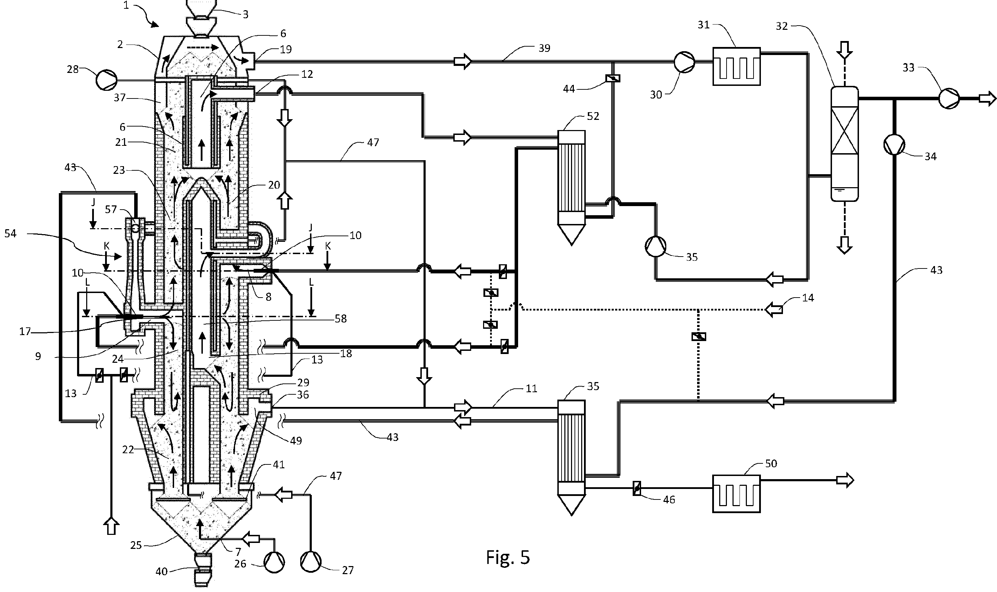

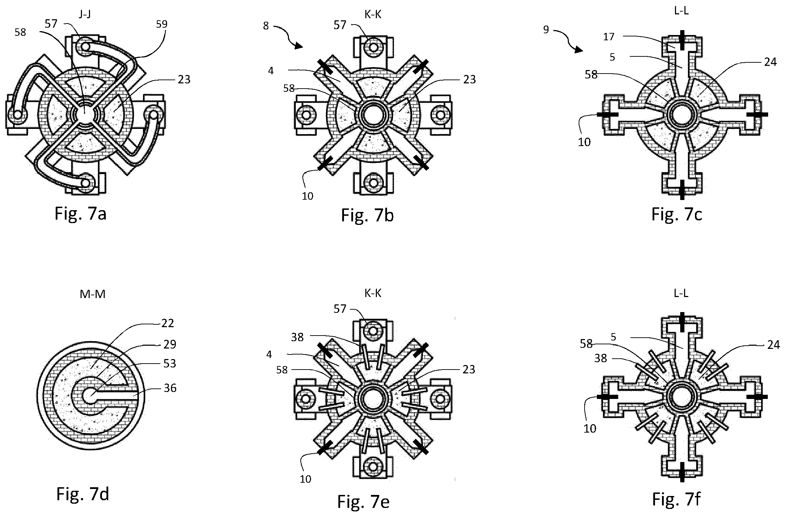

Fig. 5 zeigt ein weiteres Ausführungsbeispiel eines Schachtofens 1. Der Schachtofen 1 wird vorzugsweise zum Erreichen von hohen Durchsatzleistungen verwendet und entspricht größtenteils dem Schachtofen der Fig. 1 bis 4 mit dem Unterschied, dass der Schachtofen 1 der Fig. 5 als Ringschachtofen ausgebildet ist. Beispielhaft erfolgt der Abzug des Abgases über einen materialfreien Ringspalt 37. Im Unterschied zu den Fig. 1 bis 4 sind in der Brennzone 20 des Schachts 2 der zweite und der dritte materialfreie Raum jeweils vorzugsweise als Brennkammerebene 8, 9 ausgebildet, wobei in jeder Brennkammerebene 8, 9 zumindest eine Brennkammer 4, 5 angeordnet ist. In Fig. 5 sind beispielhaft zwei Brennkammerebenen 8, 9 in dem Schacht 2 angeordnet. Es ist ebenfalls denkbar, dass leidglich eine Brennkammerebene 8, 9 oder mehr als zwei Brennkammerebenen vorhanden sind. Die Brennkammerebenen 8, 9 sind im Detail mit Bezug auf die Fig. 7a bis fbeschrieben. Beispielhaft ist in jeder Brennkammer 4, 5 der Brennkammerebenen 8, 9 ein Brenner 10 angebracht. Der Brenner 10 ist beispielsweise eine Brennerlanze, die sich im Wesentlichen horizontal in die Brennkammer 4, 5 erstreckt. Die Brennkammern 4, 5 weisen jeweils einen Gaseinlass zum Einlassen von rezierkuliertem Abgas auf. Vor dem Einlassen des Abgases in die Brennkammern 4, 5 wird dieses vorzugsweise über die Oxidationsmittelleitung 14 mit dem Oxidationsmittel vermischt. Die Abgasauslassleitung 39 ist vorzugsweise wie mit Bezug auf die vorangehenden Figuren ausgebildet, sodass ein Teil des Abgases als Treibgas über die Treibgasleitung 43 abgezweigt und vorzugsweise über den Wärmetaucher 35 dem Injektor 57 der Umwälzeinrichtung zugeführt wird.

Vorzugsweise bildet sich innerhalb der Brennzone 20 eine Gegenstrombrennzone 23 aus, in welcher das Material entgegen der Gasströmung durch den Schacht 2 strömt. Die Gegenstrombrennzone 23 bildet sich beispielhaft oberhalb der unteren Brennkammerebene 9 aus. Zusätzlich bildet sich innerhalb der Brennzone 20 eine Gleichstrombrennzone 24 aus, in welcher die Gasströmung in gleicher Richtung zu der Materialströmung durch den Schacht 2 verläuft. Die Gleichstrombrennzone 24 ist beispielhaft unterhalb der unteren Brennkammerebene 9 ausgebildet. Die Anordnung der Gleichstrombrennzone 24 und der Gegenstrombrennzone kann je nach Fließgeschwindigkeit des Materials und der Gasströmung variieren, wobei die Gegenstrombrennzone 23 vorzugsweise immer oberhalb der Gleichstrombrennzone 24 ausgebildet ist.

Der Schachtofen 1 der Fig. 5 weist, insbesondere zur Ausbildung der Gleichstrombrennzone 24, eine Umwälzeinrichtung 54 zum Umwälzen eines Umwälzgases in der Brennzone 20 auf. Die Umwälzeinrichtung 54 umfasst einen beispielhaft konzentrisch zu dem Schacht 2 und innerhalb dessen angeordneten Innenzylinder 58. Der Innenzylinder 58 ist innerhalb der Brennzone 20 angeordnet und erstreckt sich von der Gleichstrombrennzone 24 in die Gegenstrombrennzone 23 und vorzugsweise bis in die Vorwärmzone 21 oder insbesondere bis an die Grenze zwischen der Vorwärmzone 21 und der Brennzone 20 und über einen oder eine Mehrzahl von Auslässen 59 durch die Schachtwand aus dem Schacht 2 hinaus. Die Anordnung des Auslasses oder der Auslässe 59 ist in Fig. 7a dargestellt. Der Innenzylinder 58 erstreckt sich durch den Schacht 2 beispielsweise bis zu dem Gasauslass zum Auslassen des Gases aus dem Schacht 2 oder über diesen hinaus. **In** der Gleichstrombrennzone 24 weist der Innenzylinder einen Gaseinlass zum Einlassen von Gas der Gleichstrombrennzone 24 in den Innenzylinder 58 auf. Der Gaseinlass weist die Funktion des Umwälzgasauslasses 18, wie mit Bezug auf die vorangehenden Figuren beschrieben auf. Über den Umwälzgasauslass 18 wird das Umwälzgas aus der Brennzone 20, insbesondere der Gleichstrombrennzone 24 ausgelassen und dem Umwälzgaseinlass 17 zum Einlassen des Umwälzgases in die Brennzone 20 über den Injektor 57 zugeführt. Der Gasauslass ist vorzugsweise auf dem Höhenniveau der Brennzone 20 angeordnet. Vorzugsweise ist die Brennzone 20 des Schachts 2 zumindest teilweise oder vollständig als Ringraum ausgebildet, der konzentrisch zu Innenzylinder 58 der Umwälzeinrichtung 54 angeordnet ist. Der Innenzylinder 58 ist mit dem Injektor 57 verbunden, sodass das über den Innenzylinder 58 abgezogene Umwälzgas in den Injektor 57 strömt. Die Umwälzeinrichtung 54 erzeugt einen Unterdruck an dem Umwälzgasauslass 18, sodass das Umwälzgas innerhalb der Brennzone 20 von dem Umwälzgaseinlass 17 zu dem Umwälzgasauslass 18 strömt und die Gleichstrombrennzone 24 ausbildet.

Zur Kühlung des Innenzylinders 58 weist der Schacht 2 vorzugsweise einen Kühllufteinlass auf, durch welchen Kühlluft oberhalb der Austragsvorrichtung 41 mittels eines Kühlluftverdichters 27 in eine Kühlluftleitung 47 eingeleitet wird. Die Kühlluftleitung 47 erstreckt sich vorzugsweise entlang des Innenzylinders 58, insbesondere entlang der Außenwand des Innenzylinders 58 und mündet vorzugsweise in die Kühlluftabzugsleitung 11. Der Innenzylinder 58 ist insbesondere nach oben geschlossen, sodass kein zu brennendes Material in den Innenzylinder 58 eintritt. Die Brennzone 20 weist insbesondere einen kreisringförmigen Querschnitt auf, wobei die Breite des Kreisrings etwa 0,5 bis 2m, vorzugsweise etwa 1 m beträgt.

Der Schacht 2 weist des Weiteren eine Kühlgasabzugseinrichtung 29 zum Abführen zumindest eines Teils der Kühlluft aus dem Schacht 2 auf. Die Kühlluftabzugseinrichtung 29 des Schachtofens 1 der Fig. 5 ist beispielhaft als Ringraum ausgebildet, der den unteren Teil der Brennzone 20, insbesondere die Gleichstrombrennzone 24 umschließt. Die Kühlgasabzugseinrichtung 29 ist zwischen der äußeren Wand der Gleichstrombrennzone 24 und der inneren Wand der Kühlzone 22 ausgebildet und im Betrieb des Schachtofens 1 materialfrei. Über den Kühlgasauslass 36 wird mittels der Kühlluftabzugsleitung 11 vorzugsweise sie gesamte durch die Kühlzone 22 strömende Kühlluft abgezogen und dem Wärmetauscher 35 zur Erwärmung des rezirkulierten Abgases zugeführt. Stromabwärts des Wärmetauschers 35 wird die Kühlluft mittels eines Filters 50 entstaubt und abgeführt. Die Menge an abzuziehender Kühlluft ist über das Regelorgan 46, wie mit Bezug auf Fig. 1 beschrieben einstellbar.

Der Schachtofen 1 weist des Weiteren optional einen oberen Innenzylinder 6 auf, der sich von der Brennzone 20 zumindest teilweise durch die Vorwärmzone 21 erstreckt und oberhalb der Kühlgasabzugseinrichtung 29 angeordnet ist. Der obere Innenzylinder 6 weist einen Auslass 12 zum Auslassen von Gas aus dem Schacht 2 auf. Im Betrieb des Schachtofens 1 dient der obere Innenzylinder 6 einer Vergleichmäßigung des Materialflusses innerhalb der Vorwärmzone 21 und als weist die Funktion des ersten materialfreien Raums 16, wie mit Bezug auf die vorangehenden Figuren beschrieben. Über den oberen Innenzylinder 6 wird Gas aus der Brennzone 20, insbesondere der Gegenstrombrennzone 23 aus dem Schacht 2 über den Gasauslass 12 abgeführt und vorzugsweise dem Wärmetauscher 52 zur Erwärmung des rezierkulierten Abgases vor dem Eintritt in die Brennzone 20 zugeführt. Vorzugsweise ist in der Vorwärmzone 21 ein Kühllufteinlass zum Kühlen des oberen Innenzylinders 6 angeordnet. Durch den Kühllufteinlass strömt vorzugsweise mittels eines Ventilators 28 beschleunigte Kühlluft in eine um die Vorwärmzone 21 herum angeordnete Ringleitung und/ oder eine zumindest teilweise innerhalb des oberen Innenzylinders 6 angebrachte Kühlluftleitung. Die Kühlluft wird beispielhaft der Kühlluftleitung 47 zugeführt.

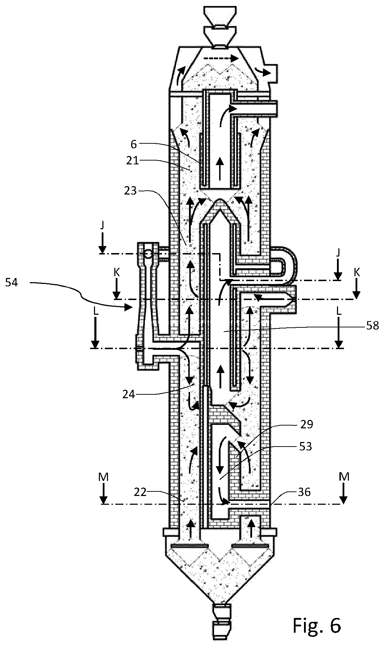

Fig. 6 zeigt eine weitere Ausführungsform eines Schachtofens, die im Wesentlichen der der Fig. 5 entspricht. Im Unterschied zur Fig. 5 weist der Schachtofen 1 der Fig. 6 eine Kühlluftabzugseinrichtung 29 auf, die einen unteren Innenzylinder 53 mit einem Kühlgasauslass 36 aufweist. Der untere Innenzylinder 53 ist unterhalb des Innenzylinders 58 der Umwälzeinrichtung 54 angeordnet und erstreckt sich durch die Kühlzone 22. Der untere Innenzylinder 53 weist einen Gaseinlass zum Einlassen der Kühlluft in den unteren Innenzylinder 53 auf, wobei der Gaseinlass oberhalb des Kühlgasauslasses 36 angeordnet ist.

In den Fig. 7a bis f sind horizontale Querschnitte der Schachtöfen 1 der Fig. 5 und 6 dargestellt, wobei die Schnittebenen in den Fig. 5 und 6 eingezeichnet sind. Fig. 7a zeigt die Auslässe 59 zum Auslassen des Umwälzgases aus dem Innenzylinder 58 in den Injektor 57. Beispielhaft weist der Innenzylinder 58 vier Auslässe 59 auf, die gleichmäßig zueinander beabstandet sternförmig radial nach außen verlaufen. Jeder Auslass 59 ist jeweils mit einem Injektor 57 verbunden, über welchen das abgezogenen Umwälzgas dem Umwälzgaseinlass 17 zugeführt wird.

Fig. 7b zeigt einen horizontalen Querschnitt durch die obere Brennkammerebene 8. Die Brennkammerebene 8 weist beispielhaft vier Brennkammern 4 mit jeweils einem Brenner 10 auf, die vorzugsweise sternförmig in der Brennzone 20, insbesondere der Gegenstrombrennzone 23, angeordnet und gleichmäßig zueinander beabstandet sind. Es ist ebenfalls denkbar, dass eine oder mehrere Brennkammerebenen 8 mehr oder weniger als vier Brennkammern 4 aufweisen. Die Brennkammern 4 der Brennkammerebenen 8 sind beispielhaft in einem Winkel von etwa 45° versetzt zueinander angeordnet. Davon abweichende Anordnungen sind ebenfalls denkbar. Die Brennkammern 4 sind vorzugsweise durch seitliche Querwände abgegrenzt und nach unten und oben in Richtung des Schachtes 2 geöffnet, sodass das in der Brennkammer 4 erwärmte Gas in die Brennzone 20 strömt. Zwischen benachbarten Brennkammern 4 sind jeweils Durchlässe angeordnet, sodass das Material und das Gas entlang des Schachtes 2 strömen können. **In** Fig. 7e ist eine weitere Ausführungsform dargestellt, wobei eine Mehrzahl von Seitenbrennern 38 jeweils zwischen den Brennkammern 4 angeordnet sind. Beispielhaft sind jeweils zwei Seitenbrenner 38 zwischen zwei Brennkammern 4 angeordnet, wobei auch eine davon abweichende Anzahl, wie ein oder drei Seitenbrenner 38, möglich ist.

Fig. 7c zeigt einen Querschnitt durch die zweite Brennkammerebene 9, die beispielhaft vier Brennkammern 5 aufweist, die wie mit Bezug auf Fig. 7b beschrieben angeordnet und ausgebildet sind mit dem Unterschied, dass jede Brennkammer einen Umwälzgaseinlass 17 aufweist, der jeweils mit einem jeweiligen nicht dargestellten Injektor 57 verbunden ist. Schachtofen 1 weist somit beispielsweise vier Umwälzgaseinlässe 17 auf, die umfangsmäßig um die Brennzone 20 angeordnet sind. **In** Fig. 7f ist eine weitere Ausführungsform dargestellt, wobei eine Mehrzahl von Seitenbrennern 38 jeweils zwischen den Brennkammern 5 angeordnet sind. Beispielhaft sind jeweils zwei Seitenbrenner 38 zwischen zwei Brennkammern 5 angeordnet, wobei auch eine davon abweichende Anzahl, wie ein oder drei Seitenbrenner 38, möglich ist.

Fig. 7d zeigt einen Querschnitt durch die Ebene des Kühlgasauslasses 36 der Fig. 6. Der Schachtofen 1 weist beispielhaft ausschließlich einen Kühlgasauslass 36 zum Auslassen des Kühlgases aus der Kühlzone 22 auf. Der Kühlgasauslass 36 ist insbesondere rohrförmig ausgebildet und erstreckt sich radial von dem unteren Innenzylinder 53 nach außen.

### Bezugszeichenliste

- 1: Schachtofen
- 2: Schacht
- 3: Materialeinlass/ Schleuse
- 4: Brennkammer der oberen Brennkammerebene
- 5: Brennkammer der unteren Brennkammerebene
- 6: oberer Innenzylinder
- 7: Kühllufteinlass
- 8: obere Brennkammerebene
- 9: untere Brennkammerebene
- 10: Brenner
- 11: Kühlluftabzugsleitung
- 12: Gasauslass
- 13: Brennstoffleitung
- 14: Oxidationsmittelleitung
- 15: Gaseinlass
- 16: erster materialfreier Raum
- 17: Umwälzgaseinlass
- 18: Umwälzgasauslass
- 19: Abgasauslass
- 20: Brennzone
- 21: Vorwärmzone
- 22: Kühlzone
- 23: Gegenstrombrennzone
- 24: Gleichstrombrennzone
- 25: Auslasstrichter
- 26: Kühlluftverdichter
- 27: Kühlluftverdichter
- 28: Verdichter / Ventilator
- 29: Kühlluftabzugseinrichtung
- 30: Verdichter / Ventilator
- 31: Abgasfilter
- 32: Kühleinrichtung
- 33: Verdichter / Ventilator
- 34: Verdichter / Ventilator
- 35: erster Wärmetauscher
- 36: Kühlgasauslass
- 37: Ringspalt
- 38: Seitenbrenner
- 39: Abgasauslassleitung
- 40: Materialauslass/ Schleuse
- 41: Austragsvorrichtung
- 43: Treibgasleitung
- 44: Regeleinrichtung
- 46: Regelorgan
- 47: Kühlluftleitung
- 48: dritter materialfreier Raum
- 49: vierter materialfreier Raum
- 50: Filter
- 51: Verdichter / Ventilator
- 52: zweiter Wärmetauscher
- 53: unterer Innenzylinder
- 54: Umwälzeinrichtung
- 55: zweiter materialfreier Raum
- 57: Injektor
- 58: Innenzylinder
- 59: Auslass

## Patentansprüche

1. Verfahren zum Brennen von insbesondere karbonathaltigem Material in einem Schachtofen (1) mit einem Schacht (2), wobei das Material durch einen Materialeinlass (3) in eine Vorwärmzone (21) zum Vorwärmen des Materials, eine Brennzone (20) zum Brennen des Materials und eine Kühlzone (22) zum Kühlen des gebrannten Materials zu einem Materialauslass (40) strömt,
wobei Kühlluft in die Kühlzone (22) eingelassen wird,
wobei das Abgas über einen Abgasauslass (19) aus der Vorwärmzone des Schachts (2) ausgelassen wird und
wobei das über den Abgasauslass (19) aus der Vorwärmzone des Schachts (2) ausgelassene Abgas zumindest teilweise in die Brennzone (20) geleitet wird
**dadurch gekennzeichnet, dass**
ein Umwälzgas innerhalb der Brennzone (20) umgewälzt wird, sodass sich eine Gleichstrombrennzone (24) innerhalb der Brennzone (20) ausbildet und wobei das Umwälzgas ausschließlich aus dem Abgas der Gleichstrombrennzone (24) besteht.

2. Verfahren nach Anspruch 1, wobei Umwälzgas über einen Umwälzgasauslass (18) aus der Brennzone (20) ausgelassen, einer Umwälzeinrichtung (54) zugeführt und von der Umwälzeinrichtung (54) über einen Umwälzgaseinlass (17) in die Brennzone (20) eingeleitet wird.

3. Verfahren nach einem der Ansprüche 1 oder 2, wobei das Umwälzgas in Richtung des Umwälzgaseinlasses (17) mittels eines Injektors (57) beschleunigt wird.

4. Verfahren nach einem der vorangehenden Ansprüche, wobei das Abgas zumindest teilweise in die Umwälzeinrichtung (54) geleitet und zusammen mit dem Umwälzgas in die Brennzone (20) eingeführt wird.

5. Verfahren nach einem der vorangehenden Ansprüche, wobei die Kühlluft über eine Kühlgasabzugseinrichtung (29) aus dem Schacht (2) ausgelassen wird.

6. Verfahren nach einem der vorangehenden Ansprüche, wobei das Abgas vor dem Einleiten in die Brennzone (20) einem Wärmetauscher (32, 35) zugeführt wird.

7. Verfahren nach einem der Ansprüche 3 bis 6, wobei das Abgas zusammen mit dem Umwälzgas in den Injektor (57) eingeführt wird.

8. Verfahren nach einem der vorangehenden Ansprüche, wobei das Abgas mittels einer zwischen dem Abgasauslass (19) und der Brennzone (20) angeordneten Heizvorrichtung auf eine Temperatur von 800°C bis 1200°C, insbesondere 1100°C, erhitzt wird.

9. Verfahren nach einem der vorangehenden Ansprüche, wobei das über den Abgasauslass (19) abgeführten Abgas über einen Gaseinlass (15) in die Brennzone (20) eingeleitet wird.

## Claims

1. A process for burning in particular carbonate-containing material in a shaft kiln (1) having a shaft (2), wherein the material flows through a material inlet (3) into a preheating zone (21) for preheating the material, a burning zone (20) for burning the material and a cooling zone (22) for cooling the burned material, to a material outlet (40),
wherein cooling air is admitted into the cooling zone (22),
wherein the offgas is discharged from the preheating zone of the shaft (2) via an offgas outlet (19) and
wherein the offgas discharged from the preheating zone of the shaft (2) via the offgas outlet (19) is conducted at least in part into the burning zone (20),
**characterized in that**
a circulating gas is circulated within the burning zone (20) so that a cocurrent burning zone (24) is formed within the burning zone (20) and wherein the circulating gas consists exclusively of the offgas from the cocurrent burning zone (24).

2. The process as claimed in claim 1, wherein circulating gas is discharged from the burning zone (20) via a circulating gas outlet (18), fed to a circulating device (54), and introduced by the circulating device (54) into the burning zone (20) via a circulating gas inlet (17).

3. The process as claimed in either of claims 1 and 2, wherein the circulating gas is accelerated in the direction of the circulating gas inlet (17) by means of an injector (57).

4. The process as claimed in any of the preceding claims, wherein the offgas is at least in part conducted into the circulating device (54) and introduced together with the circulating gas into the burning zone (20).

5. The process as claimed in any of the preceding claims, wherein the cooling air is discharged from the shaft (2) via a cooling gas takeoff device (29).

6. The process as claimed in any of the preceding claims, wherein the offgas is fed to a heat exchanger (32, 35) before being introduced into the burning zone (20).

7. Method according to one of claims 3 to 6, wherein the exhaust gas is introduced into the injector (57) together with the recirculation gas.

8. Method according to one of the preceding claims, wherein the exhaust gas is heated to a temperature of 800°C to 1200°C, in particular 1100°C, by means of a heating device arranged between the exhaust gas outlet (19) and the combustion zone (20).

9. Method according to one of the preceding claims, wherein the exhaust gas discharged via the exhaust gas outlet (19) is introduced into the combustion zone (20) via a gas inlet (15).

## Revendications

1. Procédé pour brûler en particulier des matériaux contenant du carbonate dans un four à cuve (1) comportant une cuve (2), dans lequel le matériau s'écoule à travers une entrée de matériau (3) dans une zone de préchauffage (21) pour préchauffer le matériau, une zone de combustion (20) pour brûler le matériau et une zone de refroidissement (22) pour refroidir le matériau brûlé, vers une sortie de matériau (40),
dans lequel de l'air de refroidissement est admis dans la zone de refroidissement (22),
dans lequel les gaz résiduaires sont évacués de la zone de préchauffage du four vertical (2) par une sortie de gaz résiduaires (19) et
dans lequel les gaz résiduaires évacués de la zone de préchauffage du puits (2) via la sortie de gaz résiduaires (19) sont conduits au moins en partie dans la zone de combustion (20),
**caractérisé en ce que**
un gaz de circulation circule à l'intérieur de la zone de combustion (20) de manière à former une zone de combustion à co-courant (24) à l'intérieur de la zone de combustion (20) et dans lequel le gaz de circulation est constitué exclusivement du gaz résiduaire provenant de la zone de combustion à co-courant (24).

2. Procédé selon la revendication 1, dans lequel le gaz en circulation est évacué de la zone de combustion (20) via une sortie de gaz en circulation (18), acheminé vers un dispositif de circulation (54) et introduit par le dispositif de circulation (54) dans la zone de combustion (20) via une entrée de gaz en circulation (17).

3. Procédé selon l'une ou l'autre des revendications 1 et 2, dans lequel le gaz en circulation est accéléré dans la direction de l'entrée de gaz en circulation (17) au moyen d'un injecteur (57).

4. Procédé selon l'une quelconque des revendications précédentes, dans lequel le gaz résiduaire est au moins en partie conduit dans le dispositif de circulation (54) et introduit avec le gaz de circulation dans la zone de combustion (20).

5. Procédé selon l'une quelconque des revendications précédentes, dans lequel l'air de refroidissement est évacué du puits (2) via un dispositif de prélèvement de gaz de refroidissement (29).

6. Procédé selon l'une quelconque des revendications précédentes, dans lequel le gaz résiduaire est acheminé vers un échangeur de chaleur (32, 35) avant d'être introduit dans la zone de combustion (20).

7. Procédé selon l'une des revendications 3 à 6, dans lequel le gaz d'échappement est introduit dans l'injecteur (57) avec le gaz de recirculation.

8. Procédé selon l'une des revendications précédentes, dans lequel le gaz d'échappement est chauffé à une température comprise entre 800 °C et 1 200 °C, en particulier 1 100 °C, au moyen d'un dispositif de chauffage disposé entre la sortie de gaz d'échappement (19) et la zone de combustion (20).

9. Procédé selon l'une des revendications précédentes, dans lequel les gaz d'échappement évacués par la sortie de gaz d'échappement (19) sont introduits dans la zone de combustion (20) par une entrée de gaz (15).
